# EUROPEAN PATENT APPLICATION

(11) **EP 4 741 534 A1**
(43) Date of publication of application: **13.05.2026**
(21) Application number: 24863113.7
(22) Date of filing: 28.08.2024
(51) Int. Cl.: C25B 9/23, C25B 1/04, C25B 13/08, C25B 11/073, C25B 9/77

(54) **MEMBRANE ELECTRODE ASSEMBLY MANUFACTURING METHOD**

(30) Priority: 06.09.2023 KR 20230118326
(71) Applicant: LG Chem, Ltd., Seoul 07336 (KR)
(72) Inventor: YOO, Jae Hyun, Daejeon 34122 (KR); KIM, Kwang Hwan, Daejeon 34122 (KR); NOH, Tae Geun, Daejeon 34122 (KR); LEE, Jong Jin, Daejeon 34122 (KR); JEONG, Jae Hak, Daejeon 34122 (KR)
(74) Representative: Hoffmann Eitle
(86) International application number: PCT/KR2024/012867
(87) International publication number: WO 2025/053532

(57) **Abstract**

The present invention relates to a method of manufacturing a membrane electrode assembly, the method including the steps of: forming a first catalyst layer on the other surface of a separation membrane having a first carrier film attached to one surface(S1); attaching a second carrier film to the other surface of the separation membrane having the first catalyst layer formed(S2); removing the first carrier film attached to the one surface of the separation membrane(S3); and forming a second catalyst layer on the one surface of the separation membrane from which the first carrier film has been removed(S4), wherein the second carrier film includes a first region corresponding to the first catalyst layer among the other surface of the separation membrane, and a second region that is the remaining region excluding the first region, wherein the second region of the second carrier film has an pressure sensitive adhesive coated on a surface facing the other surface of the separation membrane on which the first catalyst layer is formed.

## Description

### [Technical Field]

### CROSS-REFERENCE TO RELATED APPLICATION

This application claims the benefit of priority to Korean Patent Application No. 10-2023-0118326 filed on September 6, 2023, the disclosure of which is incorporated herein by reference in its entirety.

### Technical Field

The present invention relates to a method for manufacturing a membrane electrode assembly.

### [Background Art]

Hydrogen is expected to play a very important role as a future energy storage medium. The use of infinite energy sources and pollution-free, sustainable renewable energy will highlight the problem of energy storage, and hydrogen is currently positioned as an alternative. Hydrogen is evaluated as a very valuable substance that can replace fuel without emitting harmful substances in all areas where existing fossil fuels are used. In addition, various methods are being studied for the conversion of renewable energy into hydrogen energy, and among them, one of the important methods is water electrolysis technology.

The water electrolysis technology is a technology that can electrolyze water to separate it into oxygen and hydrogen, and use the hydrogen as fuel. A water electrolysis cell in which the water electrolysis technology is implemented includes a catalyst electrode in which an electrochemical reaction occurs and a polymer electrolyte membrane that transfers hydrogen ions generated by the electrochemical reaction, wherein a gas diffusion layer(GDL), a gasket, and a separation plate may be additionally disposed on both sides of the polymer electrolyte membrane, respectively.

In this case, the catalyst electrode for producing hydrogen through the water electrolysis technology is composed of a hydrogen evolution reaction(HER) electrode(cathode) that generates hydrogen by reducing water, and an oxygen evolution reaction(OER) electrode(anode) that generates oxygen by oxidizing water, wherein the cathode and the anode are joined to both sides of the polymer electrolyte membrane without gaps, respectively, and this structure is called a membrane electrode assembly (MEA).

The principle of water electrolysis is that water is supplied to the anode and decomposed into oxygen gas, electrons, and hydrogen ions(H⁺), wherein the electrons are transferred to the cathode through an external circuit, and the hydrogen ions(H⁺) are transferred to the cathode through the polymer electrolyte membrane. The electrons and hydrogen ions transferred to the cathode react with each other to generate hydrogen gas.

Meanwhile, most of the conventional methods for manufacturing membrane electrode assemblies (MEAs) are direct coating methods, which directly coat a separation membrane with catalyst ink at once, thereby causing a problem that the swelling of the membrane occurs, and the uniformity of the thickness is reduced due to wrinkles and electrode cracks. In addition, a spray method of thinly coating several times has a problem that productivity is reduced due to considerable manufacturing time, and the loss of the precious metal catalyst is large.

In addition, in order to solve the above problem, a decal transfer method was conventionally used in which an electrode was coated on a transfer film(PTFE) and decaled onto a separation membrane by a hot pressing method to manufacture a membrane electrode assembly, but this also had the problems of low productivity and high process cost.

Accordingly, in order to solve the problems of the conventional membrane electrode assembly manufacturing method and to improve the processability, productivity, and quality uniformity, the present inventors have studied a method of manufacturing a membrane electrode assembly having a uniform shape without causing swelling of a separation membrane or cracks of an electrode while directly coating a catalyst ink at once.

(Patent Document 1) KR 10-2023-0101340 A

### [Disclosure]

### [Technical Problem]

The problem to be solved by the present invention is to provide a method for manufacturing a membrane electrode assembly that can improve processability, productivity, and quality uniformity by using a direct coating method but preventing swelling of a separation membrane and cracking of an electrode.

### [Technical Solution]

The present invention provides a method of manufacturing a membrane electrode assembly.
(1) There is provided a method of manufacturing a membrane electrode assembly, the method including the steps of: forming a first catalyst layer on the other surface of a separation membrane having a first carrier film attached to one surface(S1); attaching a second carrier film to the other surface of the separation membrane having the first catalyst layer formed(S2); removing the first carrier film attached to the one surface of the separation membrane(S3); and forming a second catalyst layer on the one surface of the separation membrane from which the first carrier film has been removed(S4), wherein the second carrier film includes a first region corresponding to the first catalyst layer among the other surface of the separation membrane, and a second region that is the remaining region excluding the first region, wherein the second region of the second carrier film has an pressure sensitive adhesive coated on a surface facing the other surface of the separation membrane on which the first catalyst layer is formed.
(2) The present invention provides the method of manufacturing a membrane electrode assembly according to (1) above, wherein the first region does not contain the pressure sensitive adhesive.
(3) The present invention provides the method of manufacturing a membrane electrode assembly according to (1) or (2) above, wherein the second carrier film in step (S2) is formed of only the second region.
(4) The present invention provides the method of manufacturing a membrane electrode assembly according to any one of (1) to (3) above, wherein the first catalyst layer and the second catalyst layer in steps (S1) and (S4) are each independently formed by coating an electrode catalyst slurry on the separation membrane and then drying it.
(5) The present invention provides the method of manufacturing a membrane electrode assembly according to (4) above, wherein the coating step is performed by at least one method selected from the group consisting of a slot die method, an inkjet coating method, a spray coating method, a screen printing method, a doctor blade method, and a gravure coating method.
(6) The present invention provides the method of manufacturing a membrane electrode assembly according to any one of (1) to (5), wherein the thickness of the first carrier film and the second carrier film in the steps (S1) and (S2) are greater than 10 µm and less than or equal to 200 µm.
(7) The present invention provides the method of manufacturing a membrane electrode assembly according to any one of (1) to (6), wherein the first carrier film and the second carrier film include at least one selected from the group consisting of polytetrafluoroethylene, tetrafluoroethylene-hexafluoropropylene, tetrafluoroethylene-perfluoroalkyl vinyl ether, ethylene/tetrafluoroethylene, polyvinylidene fluoride, polyvinyl chloride, polyimide, polyethylene, polypropylene, polyethylene terephthalate, and polyester.
(8) The present invention provides the method of manufacturing a membrane electrode assembly according to any one of (1) to (7), the pressure sensitive adhesive includes at least one selected from the group consisting of an acrylic resin, a silicone resin, a rubber resin, a urethane resin, a polyester resin, and an epoxy resin.
(9) The present invention provides the method of manufacturing a membrane electrode assembly according to any one of (1) to (8), wherein the separation membrane is a cation exchange separation membrane or an anion exchange separation membrane.
(10) The present invention provides the method of manufacturing a membrane electrode assembly according to any one of (1) to (9), wherein the first catalyst layer is formed of an electrode catalyst slurry including at least one selected from the group consisting of Pt, Sn, Al, Au, Ag, C, Cd, Co, Cr, Cu, Ga, Hg, In, Mo, Nb, Ni, NiCo₂O₄, Ni-Fe alloy, Pb, Rh, Ti, V, W, Zn, and mixtures thereof.
(11) The present invention provides the method of manufacturing a membrane electrode assembly according to any one of (1) to (10), wherein the second catalyst layer is formed of an electrode catalyst slurry including at least one selected from the group consisting of Ir, Pt, Au, Pd, Ag, Rh, Ru, Ni, Al, Mo, Cr, Cu, Ti, W, and mixtures thereof.
(12) The present invention provides the method of manufacturing a membrane electrode assembly according to any one of (1) to (11), wherein the membrane electrode assembly is a membrane electrode assembly for water electrolysis.

### [Advantageous Effects]

According to the method of manufacturing a membrane electrode assembly of the present invention, productivity and processability are excellent by using a direct coating method, and a membrane electrode assembly with uniform quality and a desired thickness can be manufactured by preventing swelling phenomenon in a membrane and cracks in an electrode catalyst layer.

### [Description of Drawings]

FIG. 1 is a process schematic diagram of a membrane electrode assembly of the present invention.
FIG. 2(a) shows one surface of a separation membrane to which electrodes are joined, FIG. 2(b) shows a carrier film before a pressure sensitive adhesive is coated, FIG. 2(c) shows a second carrier film coated with a pressure sensitive adhesive of Example 1, and FIG. 2(d) shows a second carrier film coated with a pressure sensitive adhesive of Example 2.
FIG. 3(a) is a photograph showing a membrane electrode assembly of Example 1, and FIG. 3(b) is a photograph showing the surface of an electrode of Example 1.
FIG. 4 is a photograph showing a phenomenon in which a part of an electrode of Comparative Example 1 is peeled off.
FIG. 5(a) is a photograph showing a swelling phenomenon occurred in a membrane electrode assembly of Comparative Example 2, and FIG. 5(b) is a photograph showing cracks occurred on the surface of an electrode of Comparative Example 2.

### [Best Modes of the Invention]

Hereinafter, the present invention will be described in more detail to help understand the present invention. The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The terms used in the specification are used only to describe exemplary embodiments, and are not intended to limit the present invention. Singular expressions include plural expressions unless the context clearly implies otherwise.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

### Method for Manufacturing Membrane Electrode Assembly

The present invention provides a method of manufacturing a membrane electrode assembly, the method including the steps of: forming a first catalyst layer on the other surface of a separation membrane having a first carrier film attached to one surface(S1); attaching a second carrier film to the other surface of the separation membrane having the first catalyst layer formed(S2); removing the first carrier film attached to the one surface of the separation membrane(S3); and forming a second catalyst layer on the one surface of the separation membrane from which the first carrier film has been removed(S4), wherein the second carrier film includes a first region corresponding to the first catalyst layer among the other surface of the separation membrane, and a second region that is the remaining region excluding the first region, wherein the second region of the second carrier film has an pressure sensitive adhesive coated on a surface facing the other surface of the separation membrane on which the first catalyst layer is formed.

The conventional direct coating method has problems of wrinkles and cracks caused by swelling of a separation membrane; the spray method has the problem that a considerable amount of process time is required and the loss of precious metal is large; and the decal transfer method has the problem that productivity is low and the manufacturing process is considerably complicated because the electrode coating line and the electrode and separation membrane coating line must be separately installed.

Accordingly, the method for manufacturing a membrane electrode assembly of the present invention can reduce the cost and time required for the process by using a direct coating method, improve the contact area between the catalyst layer and the separation membrane compared to the conventional method, prevent the swelling phenomenon occurring in the separation membrane, and at the same time, prevent the peeling phenomenon that may occur between the catalyst layer and the carrier film during the catalyst layer formation process, thereby manufacturing a uniform and high-quality membrane electrode assembly.

The step (S1) is a step of forming a first catalyst layer on the other surface of a separation membrane, in which a first carrier film is attached to any one of both surfaces of the separation membrane. When the catalyst layer is directly coated on the separation membrane, the first carrier film can play a role of preventing deformation and preventing a swelling phenomenon occurring in the separation membrane. The swelling phenomenon refers to a phenomenon in which a specific substrate expands or swells, and may refer to a phenomenon in which a separation membrane expands due to a solvent included in an electrode catalyst slurry when forming a catalyst layer. In addition, when the first carrier film is attached, it should be attached in close contact with the separation membrane without generating air bubbles, and as the method for attaching the first carrier film, a method of applying a pressure sensitive adhesive may be used, and additionally, a method of utilizing electrostatic attraction may also be used. The first carrier film may have a pressure sensitive adhesive coated on the surface facing one surface of the separation membrane.

The first carrier film may be the same or different from the second carrier film, and in this specification, the carrier films attached to one surface and the other surface of the separation membrane are referred to as the first carrier film and the second carrier film, respectively, in order to distinguish each other.

In addition, the first catalyst layer may be a cathode(reduction electrode), and the second catalyst layer may be an anode(oxidation electrode).

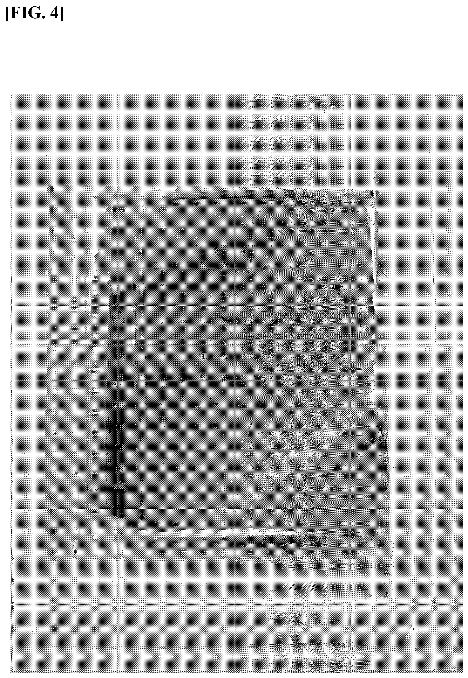

The step (S2) is a step of attaching a second carrier film coated with a pressure sensitive adhesive to the other surface of the separation membrane on which the first catalyst layer is formed. Like the first carrier film, the second carrier film can play a role of preventing a swelling phenomenon occurring in the separation membrane. However, when the second carrier film is attached to the other surface of the separation membrane on which the first catalyst layer is already formed, a problem may occur in that a part of the first catalyst layer is peeled off by the pressure sensitive adhesive. That is, there may be a problem that a part of the already attached catalyst layer is peeled off by the carrier film attached to prevent the swelling phenomenon of the separation membrane. FIG. 4 is a photograph illustrating a phenomenon in which a part of an electrode of Comparative Example 1 is peeled off. When the carrier film is attached directly on the catalyst layer previously coated on one surface of the separation membrane, a part of the catalyst layer(electrode) may be peeled off, thereby significantly reducing electrical reduction efficiency.

In the manufacturing method of the present invention, in order to prevent the problem that a part of the first catalyst layer formed first in the step (S2) is peeled off by the second carrier film, thereby causing cracks or fractures, the second carrier film may be divided into a first region corresponding to the first catalyst layer and a second region not corresponding to the first catalyst layer, and an pressure sensitive adhesive is coated on the surface of the second region facing the other surface of the separation membrane on which the first catalyst layer is formed. That is, by not coating the pressure sensitive adhesive on the first region and coating the pressure sensitive adhesive only on the second region that does not correspond to the first catalyst layer, the pressure sensitive adhesive does not come into contact with the first catalyst layer, thereby preventing the peeling phenomenon of the first catalyst layer.

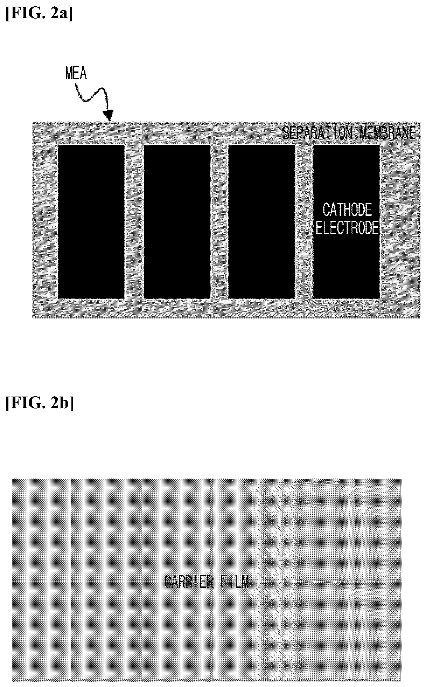

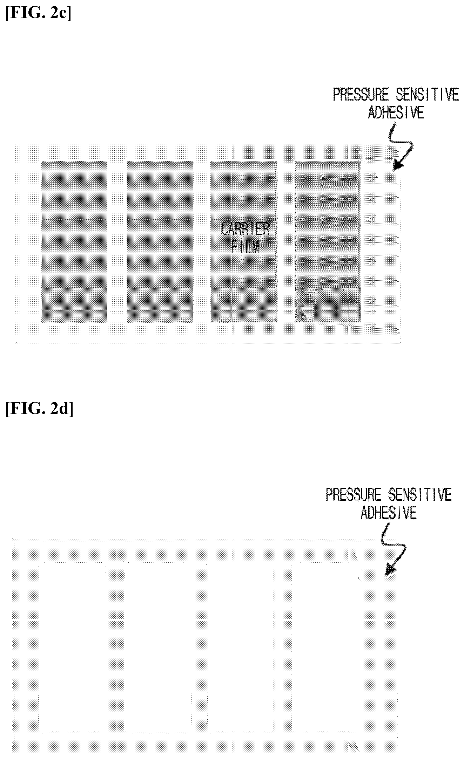

FIG. 2(a) shows one surface of a separation membrane to which electrodes are joined, FIG. 2(b) shows a carrier film before a pressure sensitive adhesive is coated, FIG. 2(c) shows a second carrier film coated with a pressure sensitive adhesive of Example 1, and FIG. 2(d) shows a second carrier film coated with a pressure sensitive adhesive of Example 2.

Referring to FIG. 2(c), the first region corresponds to the first catalyst layer, wherein a plurality of first regions may be formed in a central part of the second carrier film, and the second region may correspond to a region surrounding the first region.

In addition, according to an embodiment of the present invention, the second carrier film in the step (S2) may be formed of only the second region. Referring to FIG. 2(d), by using a carrier film composed only of a region not corresponding to the first catalyst layer, excluding a region corresponding to the first catalyst layer, the problem that a part of the first catalyst layer is peeled off can be solved.

In addition, the step (S3) is a step of removing the first carrier film attached in the step (S1), and the step (S4) is a step of forming a second catalyst layer on one surface of the separation membrane from which the first carrier film has been removed. The method of forming the second catalyst layer may be the same as the method of forming the first catalyst layer, and the swelling phenomenon can be prevented by the second carrier film. Thereafter, a step of cutting the membrane electrode assembly in which the first catalyst layer and the second catalyst layer are respectively coated on both surfaces of the separation membrane according to a desired area may be further performed.

According to one embodiment of the present invention, the first catalyst layer and the second catalyst layer in steps (S1) and (S4) may be each independently formed by coating an electrode catalyst slurry on the separation membrane and then drying it, and the coating step may be performed by at least one method selected from the group consisting of a slot die method, an inkjet coating method, a spray coating method, a screen printing method, a doctor blade method, and a gravure coating method, and specifically, by a non-contact printing method such as a slot die method or an inkjet coating method. In addition, in the manufacturing process of the membrane electrode assembly using a direct coating process, an R2R(roll-to-roll) process must be possible in order to improve productivity, and intermittent R2R methods such as screen printing and spray coating may have low productivity. As R2R processes capable of mass production, slot die, inkjet printing, and gravure printing may be applied, and among these, the most suitable method is the slot die or inkjet printing method, which is a non-contact method and has excellent electrochemical performance. The slot die method has the advantage of being able to uniformly coat a large area electrode, and the inkjet printing method has the advantage of being able to form a low-thickness electrode and being able to form a pattern and design an electrode.

Additionally, the drying step may be performed under conditions of 50°C to 100°C for 1 to 20 minutes.

Specifically, each of the first and second catalyst layers may be formed by coating an electrode catalyst slurry on the surface of the separation membrane, and the electrode catalyst slurry may be prepared by mixing a catalyst with a solvent. The first catalyst layer may be formed of an electrode catalyst slurry including at least one selected from the group consisting of Pt, Sn, Al, Au, Ag, C, Cd, Co, Cr, Cu, Ga, Hg, In, Mo, Nb, Ni, NiCo₂O₄, Ni-Fe alloy, Pb, Rh, Ti, V, W, Zn, and a mixture thereof. Also, the second catalyst layer may be formed of an electrode catalyst slurry including at least one selected from the group consisting of Ir, Pt, Au, Pd, Ag, Rh, Ru, Ni, Al, Mo, Cr, Cu, Ti, W, and mixtures thereof. More specifically, the electrode catalyst forming the first catalyst layer may be Pt, and the electrode catalyst forming the second catalyst layer may be Ir.

In addition, the catalyst may be used as a metal catalyst itself or by being supported on a carrier. As the carrier, a carbon-based material such as graphite, Denka black, Ketjen black, acetylene black, carbon nanotubes, carbon nanofibers, or activated carbon may be used, or inorganic particles such as alumina, silica, zirconia, and titania may be used. Additionally, the solvent for mixing or dissolving the catalyst may be water, an alcohol solvent such as methanol, ethanol, propanol, and isopropyl alcohol, an amide solvent such as N-methyl pyrrolidone and dimethylformamide, or a sulfoxide solvent such as dimethyl sulfoxide.

According to an embodiment of the present invention, the thicknesses of the first and second carrier films in the steps (S1) and (S2) may be greater than 10 µm and less than or equal to 200 µm. For example, the thickness of the carrier film may be 11 µm or more, 20 µm or more, 25 µm or more, 30 µm or more, 40 µm or more, 50 µm or more, 55 µm or more, 58 µm or more, 60 µm or more, 70 µm or more, 80 µm or more, 90 µm or more, and 200 µm or less, 190 µm or less, 180 µm or less, 170 µm or less, 160 µm or less, 150 µm or less, 140 µm or less, 130 µm or less, 120 µm or less, 110 µm or less, 100 µm or less, and specifically, 20 µm or more and 100 µm or less. When the first carrier film and the second carrier film satisfy the thickness range, the effect of preventing the swelling phenomenon occurring in the separation membrane is excellent, and the carrier film can be easily controlled during the coating process to increase the work processability.

According to one embodiment of the present invention, the first carrier film and the second carrier film may include at least one selected from the group consisting of polytetrafluoroethylene, tetrafluoroethylene-hexafluoropropylene, tetrafluoroethylene-perfluoroalkyl vinyl ether, ethylene/tetrafluoroethylene, polyvinylidene fluoride, polyvinyl chloride, polyimide, polyethylene, polypropylene, polyethylene terephthalate, polyethylene naphthalate, and polyester.

In addition, the pressure sensitive adhesive includes at least one selected from the group consisting of an acrylic resin, a silicone resin, a rubber resin, a urethane resin, a polyester resin, and an epoxy resin. The pressure sensitive adhesive may be coated on the surface of the carrier film, and the coating thickness may be 3 µm or more and 10 µm or less. For example, the coating thickness may be 3.0 µm or more, 3.5 µm or more, 4.0 µm or more, 4.5 µm or more, 4.5 µm or more, 5.0 µm or more, 5.5 µm or more, and 10.0 µm or less, 9.5 µm or less, 9.0 µm or less, 8.5 µm or less, or 8.0 µm or less. When the coating thickness range of the pressure sensitive adhesive is satisfied, an excellent level of adhesion can be achieved, and at the same time, the carrier film can be easily controlled, thereby improving work processability.

Specifically, the carrier film of the present invention may include PET or PEN, and the pressure sensitive adhesive may include acrylic, silicone, or urethane. When the carrier film and the pressure sensitive adhesive are used, damage and swelling of the separation membrane can be effectively prevented, and the separation membrane can be easily removed without damaging the adherend.

According to an embodiment of the present invention, the separation membrane may be a cation exchange separation membrane or an anion exchange separation membrane, and specifically, may be a cation exchange separation membrane. The separation membrane may be prepared by dissolving a cation/anion exchange resin in a solvent, or may be used by purchasing a commercially available cation/anion exchange separation membrane.

For example, the cation exchange resin may be a polymer resin having at least one cation exchange group selected from the group consisting of a sulfonic acid group, a carboxylic acid group, a phosphoric acid group, a phosphonic acid group, and a derivative thereof on its side chain. Specific examples of the polymer resin may include a hydrogen ion conductive polymer selected from the group consisting of a fluorine-based polymer, a benzimidazole-based polymer, a polyimide-based polymer, a polyetherimide-based polymer, a polysulfone-based polymer, a polyphenylenesulfide-based polymer, a polyetherketone-based polymer, a copolymer thereof, and a mixture thereof, and preferably, a film made of polyethylene terephthalate, polyimide, polyacrylonitrile, polyvinyl chloride, polytetrafluoroethylene, and polyurethane. In addition, the commercially available cation exchange separation membrane may be a Nafion separation membrane.

Additionally, for example, the anion exchange resin may include a polymer main chain, i.e., a hydrophobic component that governs the overall membrane properties, and an ion conductive head group, i.e., a hydrophilic component that is involved in the transfer of hydroxide ions(OH⁻). The ion conductive head group may include a cyclic ammonium derivative such as piperidinium, pyrrolidinium, a substituted imidazolium, and a 6-azonia-spiro[5,5]undecane; and a quaternary ammonium group such as hexyl trimethyl ammonium. Also, the polymer main chain may include at least one selected from the group consisting of polyphenylene oxide, polyetherketone, polyethersulfone, polybenzimidazole, polyphenylene, polyolefin, spirobisindene, and polynorbornene. In addition, the commercially available anion exchange separation membranes may be a sustain ion.

Also, the thickness of the separation membrane may be 10 µm or more and 200 µm or less. Specifically, the thickness of the separation membrane may be 10 µm or more, 30 µm or more, 50 µm or more, 90 µm or more, 100 µm or more, 125 µm or more, and 200 µm or less, 180 µm or less, 160 µm or less, 150 µm or less, 140 µm or less, or 130 µm or less. When the above thickness range is satisfied, the crossover phenomenon in which hydrogen moves through the separation membrane can be suppressed, and since the swelling of the separation membrane and cracking of the electrode do not occur during direct coating, the performance of the electrolysis cell or stack can be improved.

According to an embodiment of the present invention, the membrane electrode assembly manufactured by the above manufacturing method may be a membrane electrode assembly for water electrolysis. For example, the membrane electrode assembly may be included in a unit cell included in an electrochemical conversion device, wherein the electrochemical conversion device may include a fuel cell device, a device capable of producing useful chemicals through electrochemical conversion such as water electrolysis, and a device capable of being utilized for reducing and converting carbon dioxide and NOx.

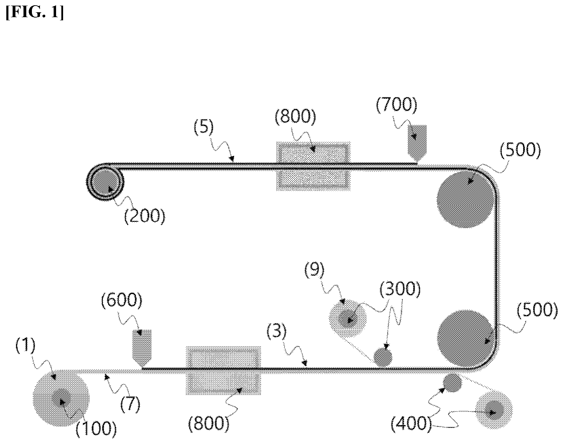

FIG. 1 is a process schematic diagram of a membrane electrode assembly of the present invention. For example, referring to FIG. 1, the process of the membrane electrode assembly manufacturing method may be carried out in the following manner. A separation membrane may be supplied by a separation membrane supply roller 100, wherein the separation membrane may have a first carrier film 7 attached to one surface of the separation membrane. The supplied separation membrane may be continuously moved toward a recovery roller 200 through the rotation of a supply roller 100, the recovery roller 200, and a support roller 500. Thereafter, an electrode catalyst slurry may be provided through a first slot die 600, and may be coated on the other surface of the separation membrane to form a first catalyst layer, which may be dried in a drying oven 800. Then, a second carrier film may be supplied through a carrier film supply roller 300, and may be attached to the other surface of the separation membrane on which the first catalyst layer is formed. Then, the first carrier film may be recovered through a carrier film recovery roller 400. The separation membrane, which has the second carrier film attached to the other side of the separation membrane from which the first carrier film is recovered and the first catalyst layer is coated thereon, may be continuously moved through a support roller 500. Thereafter, an electrode catalyst slurry may be supplied through a second slot die 700, and may be coated on one surface of the separation membrane from which the first carrier film has been recovered to form a second catalyst layer, which may be dried in the drying oven 800. Thereafter, the separation membrane, in which the first catalyst layer and the second catalyst layer are respectively coated on both sides, may be recovered through the recovery roller 200 and then cut into a desired area size to manufacture a membrane electrode assembly.

Hereinafter, examples of the present invention will be described in detail so that those skilled in the art can easily implement the present invention. However, the present invention may be embodied in a variety of forms and is not limited to the examples described herein.

### <Example 1>

An anode catalyst composition was prepared by mixing 1 g of Ir catalyst, 0.76 g of a commercial Nafion dispersion(Chemours Nafion^{™} PFSA Polymer Dispersions D2020CS), which is an ion conductive binder resin, and 1.94 g of 1-propanol(NPA) solvent.

A cathode catalyst composition was prepared by mixing 1 g of a platinum catalyst(Pt/C) supported on carbon black, 2 g of a commercial Nafion dispersion(Chemours Nafion^{™} PFSA Polymer Dispersions D2020CS), which is an ion conductive binder resin, and 7 g of 1-propanol(NPA) solvent.

Thereafter, a commercial Nafion film(Chemours Nafion^{™} N115, 127 µm) as a separation membrane was cut to a size of 160 mm × 130 mm, and a first carrier film(PET 50 µm, urethane pressure sensitive adhesive 8 µm) was attached to one surface of the Nafion film without air bubbles using a roll laminator. Thereafter, the cathode catalyst ink composition was coated on the other surface of the Nafion film with a wet thickness of 100 µm using a slot die method to form a first catalyst layer, and the separation membrane on which the first catalyst layer was formed was dried at a temperature of 80°C for 5 minutes. Thereafter, a second carrier film was attached on one surface of the Nafion film, and the first carrier film was removed.

The second carrier film was manufactured by coating the same pressure sensitive adhesive as used in the first carrier film only on a region not corresponding to the first catalyst layer, and the second carrier film was adhered to one surface of the Nafion film in the same manner as the method of adhering the first carrier film and the separation membrane.

Next, the anode catalyst ink composition was coated on one surface of the Nafion film with a wet thickness of 50 µm using a slot die method to form a second catalyst layer. Thereafter, the separation membrane on which the second catalyst layer was formed was dried at a temperature of 80°C for 5 minutes, and then the second carrier film was removed, thereby manufacturing a membrane electrode assembly using a direct coating method.

### <Example 2>

A membrane electrode assembly was manufactured in the same manner as in the Example 1, except that the second carrier film was manufactured by cutting and removing a region corresponding to the first catalyst layer among the entire regions of the second carrier film and then coating an pressure sensitive adhesive only on a region not corresponding to the first catalyst layer.

### <Example 3>

A membrane electrode assembly was manufactured in the same manner as in the Example 1, except that a first carrier film and a second carrier film having a thickness of 25 µm were used.

### <Example 4>

A membrane electrode assembly was manufactured in the same manner as in the Example 1, except that a first carrier film and a second carrier film having a thickness of 100 µm were used.

### <Example 5>

A membrane electrode assembly was manufactured in the same manner as in the Example 1, except that a Nafion separation membrane(N212, 50 µm) was used.

### <Comparative Example 1>

A membrane electrode assembly was manufactured in the same manner as in the Example 1, except that the second carrier film was manufactured by coating the pressure sensitive adhesive on the entire region of the second carrier film.

### <Comparative Example 2>

A membrane electrode assembly was manufactured in the same manner as in the Example 1, except that the first carrier film and the second carrier film were not used. Specifically, the cathode catalyst composition and the anode catalyst composition were prepared in the same manner as in the Example 1. Thereafter, a commercial Nafion film(Chemours Nafion^{™} N115, 127 µm) as a separation membrane was cut to a size of 160 mm × 130 mm, and the cathode catalyst ink composition was coated on the other surface of the Nafion film with a wet thickness of 100 µm through a slot die method to form a first catalyst layer, and the separation membrane on which the first catalyst layer was formed was dried at a temperature of 80°C for 5 minutes.

Then, the anode catalyst ink composition was coated on one surface of the Nafion film with a wet thickness of 50 µm through a slot die method to form a second catalyst layer. Thereafter, the separation membrane on which the second catalyst layer was formed was dried at a temperature of 80°C for 5 minutes to manufacture a membrane electrode assembly.

### <Comparative Example 3>

A membrane electrode assembly was manufactured in the same manner as in the Example 1, except that a first carrier film and a second carrier film having a PET thickness of 10 µm were used.

### <Comparative Example 4>

A membrane electrode assembly was manufactured in the same manner as in the Example 1, except that a first carrier film and a second carrier film not coated with the pressure sensitive adhesive and having a PET thickness of 25 µm were attached to the Nafion film by electrostatic force.

### <Experimental Example>

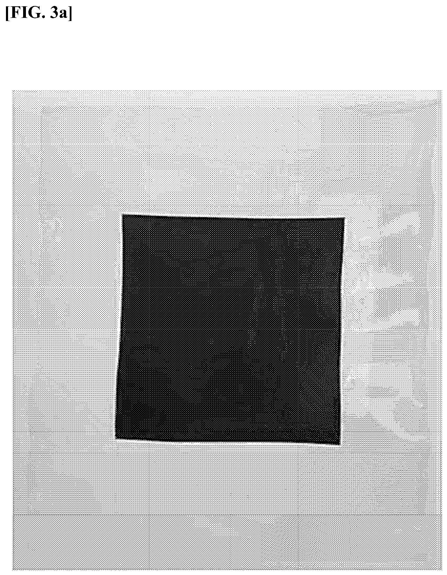

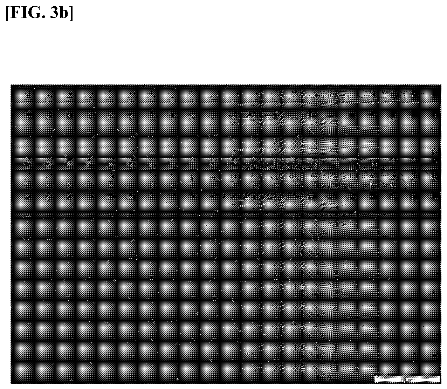

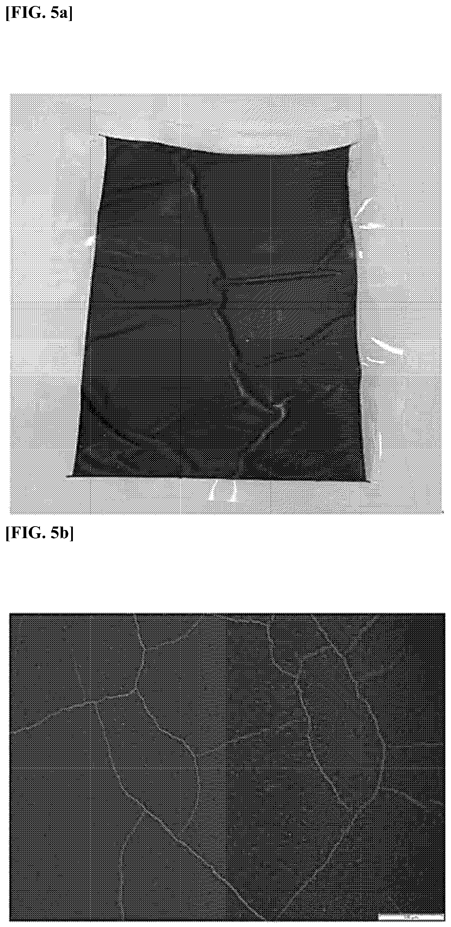

It was visually confirmed whether a swelling phenomenon occurred in the membrane electrode assembly manufactured according to the above Examples and Comparative Examples, and it was confirmed whether the catalyst layer was peeled off when the carrier film was removed during the manufacturing process, and whether cracks occurred on the surface of the manufactured membrane electrode assembly. The results are shown in Table 1 below. In addition, actual experimental photographs of the membrane electrode assembly and electrode surface of Example 1 are shown in FIG. 3, the membrane electrode assembly of Comparative Example 1 is shown in FIG. 4, and actual experimental photographs of the membrane electrode assembly and electrode surface of Comparative Example 2 are shown in FIG. 5, respectively.

**[Table 1]**

| Division | Example 1 | Example 2 | Example 3 | Example 4 | Example 5 | Compar ative Example 1 | Compar ative Example 2 | Compar ative Example 3 | Compar ative Example 4 |
|---|---|---|---|---|---|---|---|---|---|
| separatio n membran e swelling phenome non | X | X | X | X | X | X | O | O | O |
| Occurren ce of electrode cracks | X | X | X | X | X | Catalyst layer peeled off | O | O | O |

Referring to Table 1 above, in the case of the membrane electrode assembly manufactured using the direct coating method of the present invention and the carrier film satisfying the thickness range according to the present invention, swelling phenomenon, catalyst layer peeling phenomenon, and electrode surface crack did not occur. It can be confirmed that the manufacturing method of the present invention can improve work processability and productivity, reduce the process cost, and enable the manufacturing of a membrane electrode assembly with improved quality uniformity.

In contrast, it can be confirmed that in the case of Comparative Example 1 in which the entire region of the second carrier film was coated with the pressure sensitive adhesive, the previously coated catalyst layer was peeled off, and in the case of Comparative Examples 2 to 4 in which no carrier film was used, the thickness of the carrier film was outside the thickness range of the present invention, or the film was attached by electrostatic force, the separation membrane swelling phenomenon and further, the electrode surface crack occurred.

In particular, when comparing FIG. 3 with FIGS. 4 and 5, it can be confirmed that the membrane electrode assembly manufactured by Example 1 had no defects and no cracks on the electrode surface, whereas in the case of the membrane electrode assembly of Comparative Example 1, a part of the catalyst layer was peeled off, and in the case of the membrane electrode assembly of Comparative Example 2, a swelling phenomenon occurred, resulting in a curved surface, and cracks occurred on the electrode surface, resulting in significantly inferior quality.
1: separation membrane
3: First catalyst layer
5: Second catalyst layer
7: First carrier film
9: Second carrier film
100: separation membrane supply roller
200: Recovery roller
300: Carrier film supply roller
400: Carrier film recovery roller
500: Support roller
600: First slot die
700: Second slot die
800: Drying oven

## Claims

1. A method of manufacturing a membrane electrode assembly, the method including the steps of:
forming a first catalyst layer on the other surface of a separation membrane having a first carrier film attached to one surface(S1);
attaching a second carrier film to the other surface of the separation membrane having the first catalyst layer formed(S2);
removing the first carrier film attached to the one surface of the separation membrane(S3); and
forming a second catalyst layer on the one surface of the separation membrane from which the first carrier film has been removed(S4),
wherein the second carrier film includes a first region corresponding to the first catalyst layer among the other surface of the separation membrane, and a second region that is the remaining region excluding the first region,
wherein the second region of the second carrier film has a pressure sensitive adhesive coated on a surface facing the other surface of the separation membrane on which the first catalyst layer is formed.

2. The method of manufacturing a membrane electrode assembly according to claim 1, wherein the first region does not contain the pressure sensitive adhesive.

3. The method of manufacturing a membrane electrode assembly according to claim 1, wherein the second carrier film is formed of only the second region.

4. The method of manufacturing a membrane electrode assembly according to claim 1, wherein the first catalyst layer and the second catalyst layer in steps (S1) and (S4) are each independently formed by coating an electrode catalyst slurry on the separation membrane and then drying the electrode catalyst slurry.

5. The method of manufacturing a membrane electrode assembly according to claim 4, wherein the coating is performed by at least one method selected from the group consisting of a slot die method, an inkjet coating method, a spray coating method, a screen printing method, a doctor blade method, and a gravure coating method.

6. The method of manufacturing a membrane electrode assembly according to claim 1, wherein the thickness of the first carrier film and the second carrier film in the steps (S1) and (S2) are each independently greater than 10 µm and less than or equal to 200 µm.

7. The method of manufacturing a membrane electrode assembly according to claim 1, wherein the first carrier film and the second carrier film each independently include at least one selected from the group consisting of polytetrafluoroethylene, tetrafluoroethylene-hexafluoropropylene, tetrafluoroethylene-perfluoroalkyl vinyl ether, ethylene/tetrafluoroethylene, polyvinylidene fluoride, polyvinyl chloride, polyimide, polyethylene, polypropylene, polyethylene terephthalate, and polyester.

8. The method of manufacturing a membrane electrode assembly according to claim 1, wherein the pressure sensitive adhesive includes at least one selected from the group consisting of an acrylic resin, a silicone resin, a rubber resin, a urethane resin, a polyester resin, and an epoxy resin.

9. The method of manufacturing a membrane electrode assembly according to claim 1, wherein the separation membrane is a cation exchange separation membrane or an anion exchange separation membrane.

10. The method of manufacturing a membrane electrode assembly according to claim 1, wherein the first catalyst layer is formed of an electrode catalyst slurry including at least one selected from the group consisting of Pt, Sn, Al, Au, Ag, C, Cd, Co, Cr, Cu, Ga, Hg, In, Mo, Nb, Ni, NiCo₂O₄, Ni-Fe alloy, Pb, Rh, Ti, V, W, Zn, and a mixture thereof.

11. The method of manufacturing a membrane electrode assembly according to claim 1, wherein the second catalyst layer is formed of an electrode catalyst slurry including at least one selected from the group consisting of Ir, Pt, Au, Pd, Ag, Rh, Ru, Ni, Al, Mo, Cr, Cu, Ti, W, and mixtures thereof.

12. The method of manufacturing a membrane electrode assembly according to claim 1, wherein the membrane electrode assembly is a membrane electrode assembly for water electrolysis.
